Europäisches Patentamt

European Patent Office

Office européen des brevets

(19)

(11) Veröffentlichungsnummer: **0 101 540**
**B1**

(12) **EUROPÄISCHE PATENTSCHRIFT**

(45) Veröffentlichungstag der Patentschrift:
23.08.89

(51) Int. Cl.⁴: **H 02 G 15/196**

(21) Anmeldenummer: **83105971.2**

(22) Anmeldetag: **18.06.83**

(54) **Verbindungsmuffe für Starkstromkabel.**

(30) Priorität: **26.06.82 DE 3223902**

(43) Veröffentlichungstag der Anmeldung:
**29.02.84 Patentblatt 84/9**

(45) Bekanntmachung des Hinweises auf die Patenterteilung:
**23.08.89 Patentblatt 89/34**

(84) Benannte Vertragsstaaten:
**CH DE FR GB IT LI SE**

(56) Entgegenhaltungen:
**DE-B-1 057 677**
**DE-B-1 203 850**

(73) Patentinhaber: **AEG KABEL Aktiengesellschaft,
Bonnenbroicher Strasse 2-14, D-4050
Mönchengladbach 2 (DE)**

(72) Erfinder: **Holland, Karlheinz, Dipl.- Ing.,
Kreuzdornweg 54, D-4050 Mönchengladbach 4 (DE)**

(74) Vertreter: **Koch, Ingo, Dr.- Ing., AEG- TELEFUNKEN
Theodor- Stern- Kai 1, D-6000 Frankfurt 70 (DE)**

EP 0 101 540 B1

## Beschreibung

Die Erfindung betrifft eine Verbindungsmuffe der im Oberbegriff des Anspruchs 1 bezeichneten und aus der DE-C-1 203 850 bekannten Art.

Bei der bekannten Verbindungsmuffe wird der Raum über einer Leiterverbindungsstelle bis zum Außendurchmesser einer konisch abgesetzten Leiterisolierung mit Isolierbändern vollständig ausgewickelt. Darüber werden drei axial verteilte Bandwickel aufgebracht. Der mittlere Bandwickel wird mehrfach teleskopartig bis zu den seitlichen Bandwickeln ausgezogen. Anschließend werden die seitlichen Bandwickel zur Mitte so verschoben, daß äußere Seitenkonturen entstehen, die auf das elektrische Feld abgestimmt sind. Der mittlere Bandwickel wird dabei teleskopartig zusammengeschoben. Abschließend wird über den Wicklungen noch eine die ganze axiale Länge des zylindrischen Teils umfassende Abschlußwicklung und auf der gesamten Außenfläche eine Feldbegrenzung aufgebracht.

Kritische Bereiche sind die Konen der abgesetzten Leiterisolation und der Leiterverbindungshülse. Zum Abbau dort auftretender erhöhter elektrischer Feldstärken wird deshalb der Bereich außerhalb der abgesetzten Kabelisolation nicht vollständig mit Isoliermaterial ausgewickelt.

Bei der bekannten Muffe ist die Verteilung der Windungen des Teleskopwickels nach dem Verschieben mehr oder weniger von Zufälligkeiten abhängig. Die Kanten der Windungen des Teleskopwickels berühren mehr oder weniger gut die inneren seitlichen Begrenzungsflächen der beiden äußeren Bandwickel und es entstehen Stoßstellen. Wärmedehnungen der Papiere vergrößern die Spalte an den Stoßstellen, so daß die elektrische Belastung verringert werden muß. Temperaturbedingte Schubkräfte aus dem Leiter und Kurzschlußkräfte, die ein seitliches Ausbiegen des Leiters bewirken, begrenzen die Anwendung aus Spannungen und Querschnitte, die in Zukunft immer häufiger überschritten werden.

Der Erfindung liegt daher die Aufgabe zugrunde, eine Verbindungsmuffe anzugeben, die bei einfacher Herstellungsmöglichkeit verbesserte elektrische Eigenschaften aufweist.

Die Lösung dieser Aufgabe ist im kennzeichnenden Teil des Anspruchs 1 angegeben.

Vorteilhafte Ausgestaltungen der Erfindung sind in den Unteransprüchen enthalten. Durch die Erfindung wird insbesondere ein verbesserter Feldstärkeabbau über der konisch abgesetzten Leiterisolierung erzielt. Die Baulänge einer Verbindungsmuffe wird hauptsächlich durch den Aufwand für den Abbau der elektrischen Feldstärke entlang der beiden Leiterisolierungskonen bestimmt. Dadurch, daß der Feldstärkeabbau über diese Bereiche den theoretischen Vorgaben gezielt angepaßt werden kann, ist eine verkürzte Baulänge der gesamten Muffe möglich. Durch das Ineinanderverschachteln von Teilwickeln werden Stoßstellen wie bei der bekannten Lösung vermieden. Solche können selbst bei extremen Temperaturspielen nicht entstehen. Die elektrische Festigkeit einer erfindungsgemäßen Verbindungsmuffe ist auch bei extrem hohen Spannungen trotz verkleinerter Abmessungen hoch.

Die Erfindung wird am Beispiel von vier Ausführungsarten näher erläutert.

Fig. 1 zeigt einen Längsschnitt durch eine erfindungsgemäße Verbindungsmuffe, bei welcher jede Lage aus zwei unterschiedlich breiten Teilwickeln besteht; dabei zeigen die obere und untere Bildhälfte verschiedene Varianten.

Fig. 2 zeigt einen Längsschnitt durch eine erfindungsgemäße Verbindungsmuffe, bei welcher die Lagen abwechselnd entweder aus zwei breiten Teilwickeln oder drei schmalen Teilwickeln mit jeweils dazwischen liegenden Räumen bestehen, wobei wiederum zwei Varianten dargestellt sind.

Man ist bestrebt, eine mechanisch möglichst stabile Wicklung, z. B. aus breiten Isolierbändern herzustellen. Eine Kreppapier-Wicklung ist beispielsweise ungeeignet.

Die Außenmäntel und die darunterliegenden Schichten der zu verbindenden Kabel werden wie üblich auf einer gewissen Länge entfernt, so daß die Leiterisolierung 2 frei liegt. Diese wird in bekannter Weise im Bereich 14 konisch abgesetzt, so daß die Leiterenden durch die Verbindungsklemme 1 verbunden werden können. Anschließend wird in üblicher Weise der Raum 4 über der Leiterklemme 1 und den konisch abgesetzten Bereichen 14 der Isolierung bis zur Linie 3, nämlich bis zum Außendurchmesser der Leiterisolierungen 2 mit einer Wicklung aus schmalen Papierbändern ausgefüllt. Über diese Anordnung wird eine weitere Bewicklung aufgebracht, die aus mehreren Teilwickeln unterschiedlicher Breite in aufeinanderfolgenden Lagen besteht.

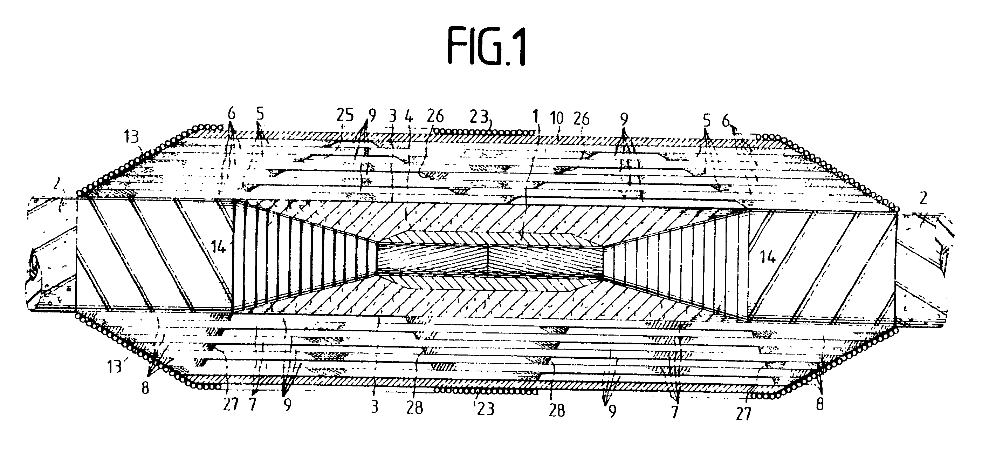

Bei der Ausführung nach Fig. 1 sind in jeder Lage ein schmaler Teilwickel 5 und ein breiter Teilwickel 6 nebeneinander unter Belassung eines wickelfreien Raumes 9 aufgewickelt. In aufeinanderfolgenden Lagen wechselt deren Reihenfolge ab, so daß auf einen schmalen Teilwickel 5 jeweils ein breiter Teilwickel 6 gewickelt wird bzw. umgekehrt, so daß die wickelfreien Räume 9 jeweils von einem breiten Teilwickel 6 abgedeckt sind.

Bei der in der oberen Hälfte der Fig. 1 dargestellten Variante sind alle breiten Wickel 6 und die schmalen Wickel 5 jeweils gleich breit. Die seitlichen konischen Begrenzungsflächen 13 werden durch entsprechendes Verschieben der Teilwickel 5 und 6 zur Mitte der Verbindungsmuffe hin oder durch schräges Aufwickeln erhalten.

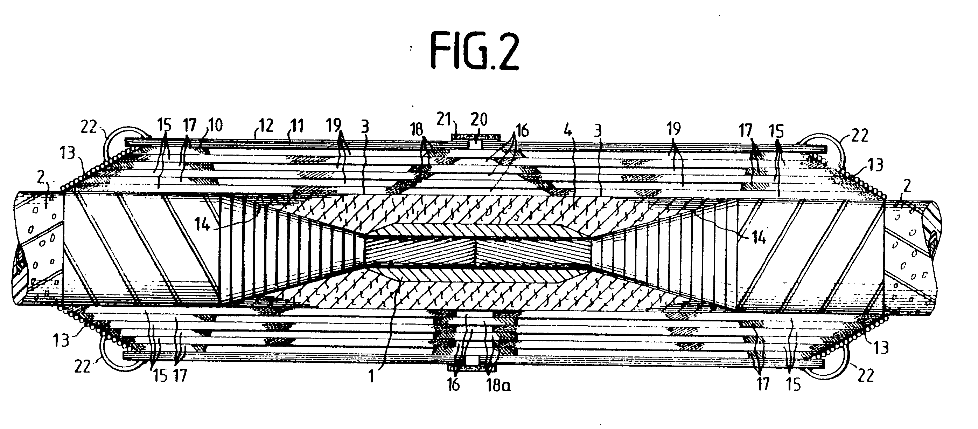

Die konische Begrenzungsfläche 13 ist mit einer leitenden, einen Deflektor bildenden Beschichtung versehen und mit der Abschirmung des Kabels leitend, beispielsweise durch Drähte 22 (Fig. 2) verbunden. Eine Abschlußwicklung 10 dient als Träger für einen Schirm 23, welcher die leitende Verbindung mit den Deflektoren herstellt.

Oberhalb der Bereiche 14 der beiden konusförmig abgesetzten Leiterisolierungen entstehen Bereiche, welche nur teilweise mit Isoliermaterial bewickelt sind und zwischen welchen ein kompakt bewickelter Bereich entsteht. Bei der in der oberen Hälfte der Figur 1 gezeigten Ausführung mit in den verschiedenen Lagen gleichbleibender Breite der Teilwickel sind die seitlichen Begrenzungslinien 25 und 26 der Lagen durch den Verlauf der Begrenzungsfläche 13 vorgegeben.

Wenn man zur Erzielung einer noch besseren elektrischen Festigkeit einen von der Begrenzungsfläche 13 unabhängigen Verlauf der seitlichen Begrenzungslinien 25 und 26 der Lagen wünscht, so sind gemäß der in der unteren Hälfte der Fig. 1 dargestellten Variante vorgeschnittene Papiere mit von Windung zu Windung kontinuierlich veränderter Breite für die Teilwickel 7 und 8 in die endgültige Position zu wickeln. Damit können die Begrenzungslinien 27 und 28 frei vorgegeben werden.

Fig. 2 zeigt nach der Erfindung hergestellt weitere Ausführungsarten, bei welchen zusätzlich mittlere Teilwickel 18 bzw. 18a verwendet sind.

Oberhalb der Mittellinie der Fig. 2 sind die Teilwickel 17 und 18 in jeder Lage unterschiedlich breit. Bei der unterhalb der Mittellinie dargestellten Abwandlung sind die Teilwickel 18a in jeder Lage gleich breit.

Das Aufbringen der gesamten Bewicklung oberhalb des Außendurchmessers der Leiterisolierung 2 läuft ähnlich wie anhand Fig. 1 beschrieben ab. Jedoch werden in jeder zweiten Lage zwei breite Teilwickel 15 aufgebracht, die in Höhe der Leiterverbindungsstellen 1 einen wickelfreien Raum 16 belassen. In der jeweils darauf folgenden Lage wird der wickelfreie Raum 19 durch einen mittleren Teilwickel 18 bzw. 18a überdeckt. An den Endbereichen der Verbindungsmuffe werden in dieser Lage schmale Teilwickel 17 aufgebracht.

Den Abschluß der Verbindungsmuffe nach Fig. 2 bilden auf der Oberfläche der weiteren Bewicklung nebeneinander aufgebrachte Abschlußbewicklungen 11, die mit einer elektrisch leitenden Schicht, beispielsweise Rußpapier, versehen sind und in der Mitte einen wickelfreien Raum 20 belassen, die durch einen Wickel 21 aus Rußpapier überdeckt ist.

Die Ausführungen nach Fig. 2 haben den Vorteil, daß infolge der zusätzlichen wickelfreien Räume 16 auch die bei hohen Temperaturschwankungen erfolgenden Verschiebungen innerhalb der Schichten innerhalb der Verbindungsmuffe besonders gut ausgeglichen werden können, ohne daß Spalte entstehen.

Durch die Bemessung der Dicke der schmalen Teilwickel im Vergleich zu derjenigen der breiten Wickel kann der relative Anteil an wickelfreien Räumen vorgegeben werden.

Die elektrischen Eigenschaften werden durch folgende Maßnahmen verbessert.

a) durch maßlich vorgegebene wickelfreie Hohlräume (9 bzw. 19, 16 und 20);

b) durch spaltfreie Trennung der wickelfreien Hohlräume in radialer Richtung durch Überlappung der Lagen, die auch thermische Verschiebungen aufnehmen,

c) durch die geometrische Ausbildung der Begrenzungsflächen (25, 27) der wickelfreien Räume, die ebenso wie Höhe und Breite derselben von Lage zu Lage den Feldbedingungen angepaßt werden können,

d) durch die Möglichkeit, die wickelfreien Räume (6, 16, 19, 20) mit beliebig verdünnten Isolierstoffen z. B. lose gewickelten Bändern auszufüllen, um die spezifische Durchschlagsfestigkeit der Tränkmassen zu erhöhen.

Eine Erhöhung der mechanischen Stabilität erfolgt durch Übertragung der Leiterkräfte in radialer Richtung durch die Überlappungsstellen der einzelnen Lagen nach außen in Bereiche hoher Biegefestigkeit.

Durch den hohen Anteil von wickelfreien Räumen (6, 16, 19, 20), die mit Isoliermasse gefüllt sind, bleiben Wärmewiderstand und dielektrische Verluste gering. Mit der höheren Wärmeabfuhr der Verbindungsmuffe kann die gesamte Kabelanlage wirtschaftlicher ausgelegt oder zur Übertragung höherer Leistung genutzt werden.

**Patentansprüche**

1. Verbindungsmuffe für eine Verbindungsstelle zweier Starkstromkabel, bei welcher der die abisolierten Leiterenden umgebende Raum (4) von einer Isolierbandwicklung bis zur Höhe des Außendurchmessers der Leiterisolierung (2) voll ausgefüllt ist, und bei welcher eine weitere Bewicklung unter Verwendung von Bändern unterschiedlicher Breite derart vorgesehen ist, daß der mittlere Bereich der Verbindungsmuffe wickelfreie Räume (9, 16, 19) aufweist, welche durch Tränkmittel, beispielsweise Öl, gefüllt sind, und wobei über der weiteren Bewicklung eine die gesamte axiale Länge der Verbindungsmuffe überdeckende Abschlußbewicklung (10) angeordnet ist, dadurch gekennzeichnet, daß die weitere Bewicklung derart in mehreren Lagen aus Bändern ausgeführt ist, daß jede Lage mehrere Teilwickel (5, 6 bzw. 7, 8 oder 15, 17) aus Bändern unterschiedlicher Breite nebeneinander mit in axialer Richtung zwischen den Teilwickeln liegenden wickelfreien Räumen (9, 19, 16) aufweist, wobei die Teilwickel der folgenden Lage in der Weise über den wickelfreien Räumen (9, 19, 16) angeordnet sind, daß jeweils ein Teilwickel der folgenden Lage die Randbereiche zweier benachbarter Teilwickel und die dazwischen liegenden wickelfreien Räume (9, 16, 19) der darunterliegenden Lage überdecken.

2. Verbindungsmuffe nach Anspruch 1, dadurch gekennzeichnet, daß deren äußere seitliche Begrenzungslinie (13) durch Lage für Lage zur Muffenmitte hin versetzte Teilwickel (5, 6, 15, 17) festgelegt ist.

3. Verbindungsmuffe nach Anspruch 1, dadurch gekennzeichnet, daß deren seitliche Begrenzungslinie (13) durch für jede Lage vorgeschnittene Teilwickel (7, 8) unterschiedlicher Breite hergestellt ist.

4. Verbindungsmuffe nach einem der Ansprüche 1 bis 3, dadurch gekennzeichnet, daß die Teilwickel (5, 6, 15, 17, 7, 8, 18, 18a) aus vorgetrocknetem und mit Öl getränktem Papier bestehen.

5. Verbindungsmuffe nach einem der Ansprüche 1 bis 4, dadurch gekennzeichnet, daß die weitere Bewicklung im mittleren Bereich der Verbindungsmuffe mindestens zwei Bereiche mit wickelfreien Räumen (9, 19, 16) aufweist.

6. Verbindungsmuffe nach Anspruch 5, dadurch gekennzeichnet, daß jede Lage der weiteren Bewicklung aus einem schmalen Teilwickel (5) und aus einem mit axialem Abstand angeordneten breiten Teilwickel (6) besteht, wobei in aufeinander folgenden Lagen abwechselnd ein breiter Teilwickel (6) auf einem schmalen Teilwickel (5) gewickelt ist bzw. umgekehrt.

7. Verbindungsmuffe nach Anspruch 5, dadurch gekennzeichnet, daß jede zweite Lage der weiteren Bewicklung aus zwei breiten Teilwickeln (15) besteht, welche mit axialem Abstand zueinander aufgewickelt sind, so daß ein wickelfreier Raum (16) zwischen ihnen verbleibt, daß die dazwischen liegenden Lagen aus zwei schmalen, am Rand angeordneten Teilwickeln (17) und einem mittleren, den wickelfreien Raum (16) überdeckenden Teilwickel (18) bestehen, wobei zwischen den am Rand angeordneten Teilwickeln (17) und den in der Mitte angeordneten Teilwickeln (18) wickelfreie Räume (19) verbleiben, welche von einem breiten Teilwickel (15) der folgenden Lage überdeckt sind (Fig. 2).

8. Verbindungsmuffe nach Anspruch 7, dadurch gekennzeichnet, daß die mittleren Teilwickel (18) verschiedener Lagen unterschiedliche Breiten besitzen.

9. Verbindungsmuffe nach Anspruch 7, dadurch gekennzeichnet, daß die mittleren Teilwickel (18) aller Lagen gleiche Breite besitzen.

10. Verbindungsmuffe nach einem der Ansprüche 7 bis 9, dadurch gekennzeichnet, daß die Abschlußbewicklung (11) in der Muffenmitte einen wickelfreien Raum (20) aufweist, welcher durch eine Lage Rußpapier (21) überdeckt ist (Fig. 2).

11. Verbindungsmuffe nach Anspruch 10, dadurch gekennzeichnet, daß die Abschlußbewicklung (11) aus einem isolierenden Papier besteht, welche von einem Wickel aus Rußpapier umgeben ist, welcher über leitende Verbindungselemente (22) mit den Kabelschirmen (konische Begrenzungsflächen 13) verbunden ist (Fig. 2).

12. Verbindungsmuffe nach einem der Ansprüche 7 bis 11, dadurch gekennzeichnet, daß die Dicke der schmalen Teilwickel (17, 18, 18a) größer als die der breiten Teilwickel (15) ist (Fig. 2).

## Claims

1. A connecting sleeve for a joint between two power cables, wherein the space (4) surrounding the stripped ends of the conductors is completely filled in with a wrapping of insulating tape up to the height of the outer diameter of the conductor insulation (2), and wherein a further taping is provided using tapes of different width in such a manner that the middle region of the connecting sleeve comprises spaces (9, 16, 19) which are free of wrapping and which are filled with an impregnating substance, for example oil, and wherein a cover taping (10) covering the whole axial length of the connecting sleeve is disposed over the further taping, characterised in that the further taping is made from tapes in a plurality of layers in such a manner that each layer comprises a plurality of component wrappings (5, 6 and 7, 8 or 15, 17) of tapes of different width side by side with wrap-free spaces (9, 19, 16) lying between the component wrappings in the axial direction, the component wrappings of the following layer being arranged over the wrap-free spaces (9, 19, 16) in such a manner that a component wrapping of the following layer covers the marginal regions of two adjacent component wrappings and the intervening wrap-free spaces (9, 16, 19) of the subjacent layer in each case.

2. A connecting sleeve according to Claim 1, characterised in that its outer lateral boundary line (13) is defined by component wrappings (5, 6, 15, 17) offset layer by layer towards the middle of the sleeve.

3. A connecting sleeve according to Claim 1, characterised in that its lateral boundary line (13) is produced by component wrappings (7, 8) of different width cut for each layer.

4. A connecting sleeve according to any one of Claims 1 to 3, characterised in that the component wrappings (5, 6, 15, 17, 7, 8, 18, 18a) consist of predried paper impregnated with oil.

5. A connecting sleeve according to any one of Claims 1 to 4, characterised in that the further taping comprises at least two regions with wrap-free spaces (9, 19, 16) in the middle region of the connecting sleeve.

6. A connecting sleeve according to Claim 5, characterised in that each layer of the further taping consists of a narrow component wrapping (5) and of a broad component wrapping (6) arranged with axial spacing, a broad component wrapping (6) being wound over a narrow component wrapping (5) or vice versa, alternately in successive layers.

7. A connecting sleeve according to Claim 5, characterised in that every other layer of the further taping consists of two broad component wrappings (15) which are wound with axial spacing apart so that a wrap-free space (16) remains between them, that the intervening layers consist of two narrow component wrappings (17) disposed at the edge and a middle component wrapping (18) covering the wrap-free space (16), and wrap-free spaces (19), which are covered by a broad component wrapping (15) of the following layer remain between the component wrappings (17) arranged at the edge and the component wrappings (18) arranged in the middle (Figure 2).

8. A connecting sleeve according to Claim 7, characterised in that the middle component wrappings (18) of different layers have different widths.

9. A connecting sleeve according to Claim 7, characterised in that the middle component wrappings (18) of all the layers have the same width.

10. A connecting sleeve according to any one of Claims 7 to 9, characterised in that the cover taping (11) comprises, in the middle of the sleeve, a wrap-free space (20) which is covered by a layer of carbon paper (21) (Figure 2).

11. A connecting sleeve according to Claim 10, characterised in that the cover taping (11) consists of an insulating paper which is surrounded by a wrapping of carbon paper which is connected by conducting connecting elements (22) to the cable shielding (tapered boundary surfaces 13) (Figure 2).

12. A connecting sleeve according to any one of Claims 7 to 11, characterised in that the thickness of the narrow component wrappings (17, 18, 18a) is greater than that of the broad component wrappings (15) (Figure 2).

## Revendications

1. Manchon de jonction pour une jonction de deux câbles à courant fort, dans lequel l'espace (4) entourant les extrémités des conducteurs dégarnies d'isolant est rempli par un enroulement en ruban isolant, jusqu'à la hauteur du diamètre extérieur de l'isolement (2) des conducteurs, et dans lequel un autre enroulement est prévu en utilisant des rubans de largeurs différentes, de manière telle que la région médiane du manchon de jonction présente des espaces (9, 16, 19) exempts d'enroulement, qui sont remplis d'un agencé d'imprégnation, par exemple de l'huile, un enroulement de fermeture (10) recouvrant toute la longueur axiale du manchon de jonction étant agent par-dessus l'autre enroulement, caractérisé par le fait que l'autre enroulement est réalisé en plusieurs couches de rubans de manière que chaque couche présente plusieurs enroulements partiels (5, 6 ou encore 7, 8 ou 15, 17) faits de rubans de largeurs différentes, situés les uns à côté des autres, des espaces (9, 19, 16) exempts d'enroulement étant situés en direction axiale entre les enroulements partiels, les enroulements partiels de la couche suivante étant agencés par-dessus les espaces (9, 19, 16) exempts d'enroulement de manière qu'un enroulement partiel de la couche suivante recouvre à chaque fois les régions marginales de deux enroulements partiels voisins et les espaces interjacents (9, 16, 19), exempts d'enroulement, de la couche sous-jacente.

2. Manchon de jonction selon revendication 1, caractérisé par le fait que sa ligne de délimitation latérale extérieure (13) est fixée par des enroulements partiels (5, 6, 15, 17) qui, couche par couche, sont décalés vers le milieu du manchon.

3. Manchon de jonction selon revendication 1, caractérisé par le fait que sa ligne de délimitation latérale (13) est réalisée par des enroulements partiels (7, 8) de largeur différente, prédécoupés pour chaque couche.

4. Manchon de jonction selon l'une des revendications 1 à 3, caractérisé par le fait que les enroulements partiels (5, 6, 15, 17, 7, 8, 18, 18a) consistent en papier préséché et imprégné d'huile.

5. Manchon de jonction selon l'une des revendications 1 à 4, caractérisé par le fait que l'autre enroulement présente, dans la région médiane du manchon de jonction, au moins deux régions avec espaces (9, 19, 16) exempts d'enroulement.

6. Manchon de jonction selon revendication 5, caractérisé par le fait que chaque couche de l'autre enroulement est constituée par un enroulement partiel étroit (5) et par un enroulement partiel large (6) agencé avec intervalle axial, un enroulement partiel large (6) étant enroulé sur un enroulement partiel étroit (5), ou inversement, en alternat dans des couches successives.

7. Manchon de jonction selon revendication 5, caractérisé par le fait que chaque deuxième couche de l'autre enroulement est constituée de deux enroulements partiels (15) qui sont enroulés avec un intervalle axial mutuel, de manière qu'il subsiste entre eux un espace (16) exempt d'enroulement, par le fait que les couches interjacentes consistent en deux enroulements partiels (17) étroits agencés sur le bord et en un enroulement partiel (18) médian recouvrant l'espace (16) exempt d'enroulement, des espaces (19) exempts d'enroulement subsistant entre les enroulements partiels (17) agencés sur le bord et les enroulements partiels (18) agencés au milieu, ces espaces (19) subsistants étant recouverts par un enroulement partiel large (15) de la couche suivante (figure 2).

8. Manchon de jonction selon revendication 7, caractérisé par le fait que les enroulements partiels médians (18) de différentes couches possèdent des largeurs différentes.

9. Manchon de jonction selon revendication 7, caractérisé par le fait que tous les enroulements partiels médians (18) de toutes les couches possèdent la même largeur.

10. Manchon de jonction selon l'une des revendications 7 à 9, caractérisé par le fait que l'enroulement de fermeture (11) présente, au milieu du manchon, un espace (20) exempt d'enroulement, qui est recouvert par une couche de papier carboné (21) (figure 2).

11. Manchon de jonction selon revendication 10, caractérisé par le fait que l'enroulement de fermeture (11) est en un papier isolant qui est entouré par un enroulement en papier carboné, lequel est relié par des éléments conducteurs (22) aux blindages des câbles (surfaces de délimitation coniques 13) (figure 2).

12. Manchon de jonction selon l'une des revendications 7 à 11, caractérisé par le fait que l'épaisseur de l'enroulement partiel étroit (17, 18, 18a) est plus grande que celle de l'enroulement partiel large (15) (figure 2).

FIG.1

# FIG.2

EP 0 101 540 B1